# EUROPEAN PATENT APPLICATION

(11) **EP 3 292 972 A1**
(43) Date of publication of application: **14.03.2018**
(21) Application number: 16788977.3
(22) Date of filing: 05.05.2016
(51) Int. Cl.: B29C 39/14, B44C 1/16, B05D 5/00

(54) **PRE-COATING SUBSTRATES WITH A COPY OF A MATRIX SURFACE USING A RADIATION-CURABLE MATERIAL**

(30) Priority: 05.05.2015 BR 102015010208
(71) Applicant: Baptista, Valter Marques, 06544-080 São Paulo, São Paulo (BR); Paduan, Wilson Andrade, 04019-000 São Paulo, São Paulo (BR)
(72) Inventor: Baptista, Valter Marques, 06544-080 São Paulo, São Paulo (BR); Paduan, Wilson Andrade, 04019-000 São Paulo, São Paulo (BR)
(74) Representative: Nederlandsch Octrooibureau
(86) International application number: PCT/BR2016/050100
(87) International publication number: WO 2016/176754

(57) **Abstract**

The present invention refers to a process for pre-coating substrates with copy a matrix surface by curable material for use in industrial printing systems and allowing the advantageous production of substrates ready for printing or finishing. It also refers to the machines necessary to its attainment, in particular those that allow the simultaneous coating of two opposite surfaces of the substrate.

## Description

The present invention relates to a method for pre-coating substrates with a copy of a matrix surface using a radiation-curable material, for use in industrial printing systems.

The graphic industry employs different types of substrates from natural ones, such as hides and skins to industrialized ones, such as paper, plastics and various polymers.

As a rule, from the substrate standpoint, the graphic industrial process involves the steps of pre-treatment, printing, post-treatment and finishing.

Pre-treatment comprises the processes necessary for the preparation of the substrate to properly receive the remaining steps and materials. A good substrate for a given application is usually unable to receive alone other materials necessary for the constitution of the final product and, for this reason, the pre-treatment step must be carried out, almost always to promote the surface modifications required for anchoring the printing components and post-treatment.

Printing is the application of inks, lacquers and varnishes that confer the materialization of art, color and various features upon the substrate, making it suitable for its particular use. Therefore, if a substrate is intended for use as foodstuff packaging, it will receive materials, that is, inks and varnishes, as designed for this application, and will usually be different if the same substrate is intended for use, for instance, as an advertising poster.

Post-treatment is the stage that will confer the specific characteristics upon the printed substrate, such as (i) visual effects, (ii) friction or touch and (iii) regulation of substrate interaction with the environment. The first group comprises the matte, glossy, and three-dimensional effects; the second one friction control between two identical substrates, such as in the case of packages to be stacked or even between the packaging and the packaged product; the third one comprises coatings that prevent the migration of undesirable printing components for packaged foodstuffs, or those that extend the quality of the printed art in products exposed to weather conditions.

Finishing is the final conformation of the printed and post-treated substrate and can be from the assembly of geometric structures, as many boxes and devices to bags, sacks and bags of many different shapes and applications.

Roughly, pre- and post-treatment refer to surface coating processes of the substrate, the former aiming at facilitating the other manufacturing steps, and the latter to confer specific characteristics. This coating can be done in several ways and can involve the use of more than one layer of material. Alternatively, these coatings may also require curing by ultraviolet (UV) radiation or by electron beams (EB).

A widely used method for post-treatment is called "cast and cure", in which a coating is applied to the substrate under pressure by a matrix printing its surface on said substrate. This procedure allows from replication of roughness to impart specific optical effects, to obtaining extremely smooth surfaces, according to technical necessity.

• Document US20100136356 "Paper coating compositions, coated papers, and methods" by Kelly *et al.* emphasizes that the quality of the final print on the substrate directly depends on the process and composition of the coating used, especially when it comes to paper, hence the urgent need to pre-treat this type of substrate, in order to correct its natural surface imperfections, given its fibrous origin. In addition, after printing, post-treatment of the already printed material can still be requested in order to give it specific characteristics such as holographic visual effects, protection of various abuses, for instance, as cited in US7674527 "Coated Paper" by Yokochi, which describes the paper substrate for fat protection.

Another factor to be considered, especially in applications involving in particular contact with food or direct contact with the skin of users, is the convenience of the use of radiation-curable coatings that, in addition to obtaining these final results with the use of less harmful materials still provides the desired characteristics immediately, since curing is instantaneous.

In many situations there is a need to treat two opposite surfaces of the substrate, which can be made by off-line processes, that is, firstly a surface is treated, then the part to be treated is inverted and the substrate is returned for the same machine, which directly impacts productivity, especially if the coating materials require waiting time before resuming production steps with the pretreated substrate. Document US2321939 "Process for coating porous materials", by Quinn, describes an alternative through a specific machine that is capable of conveying a suspending substrate to allow treatment of the opposite surface.

The processes described so far have some deleterious characteristics in common:
1. They require the application of great amount of material;
2. They do not allow efficient processing of opposite surfaces;
3. They do not exclude the need for post-treatment for obtaining specific attributes;
4. High energy consumption to allow coatings drying and curing;
5. Intensive use of the storage space to store the material while waiting until they attain ideal conditions for the next production steps.

The present invention aims to solve these and other challenges by using a process for coating substrates with a surface copy for radiation-curable materials, in which a small amount of the selected material is applied as a pre-coating on a substrate by means of pressure molding and that also allows the simultaneous application on two opposite surfaces, as shown by the description and embodiments below.

The purpose of this invention is to replace aqueous or solvent-based systems with radiation-curable systems for substrate treatment, such as papers or special films. The great advantage of this system, when combined with the concept of surface copy is that one can transfer to the surface of the paper, card or film the characteristic present in a matrix using a significantly smaller amount of coating.

Applications can usually be less than 5g/m² for exceptional results, besides completely eliminating the use of calanders that compress the substrates and cause their compaction, affecting the mechanical properties.

Compaction becomes optional since it is no longer necessary to obtain the desired surface result.

The above matrix may have a cylindrical, film or sheet shape and can be made of polymeric materials, metals or composition thereof.

Furthermore, unlike traditional technology that generally produces surfaces tending to gloss or matte, this technology can copy any type of surface characteristic, such as textures, holographies, etc.

In fact, part of this method was already used for graphic post-treatment, as the copy of holographic films by printing is a widespread technology, commercially referred to as "cast and cure", as described above.

The innovative proposal of the present invention is the transfer of this technology as pre-treatment of the films and no longer as post-treatment.

An advantage for the stationery field, in which the association of the efficiency of the method with the high productivity that can be provided by the UV or EB curing systems can generate products with characteristics more diverse than the current technologies, with much superior quality and a very reduced cost compared to the current ones.

Nowadays, the paper treatment technology is almost completely carried out through waterborne coatings and with the concept of application, thermal drying for water evaporation, followed by calendering in calenders or supercalanders to compact and smooth the surface.

As a consequence, there is a very high energy consumption for water evaporation and a surface that even though it is relatively closed, still presents a high porosity when compared to that of the plastic films.

One technology available on the market for high gloss and high quality papers is the use of waterborne coatings which are applied to papers and these are "glued" to the surface of a large heated cylinder and, at very low speed, will cause drying of this coating in contact with this cylinder, also by copying its mirrored surface.

The disadvantage of this method is the very low productivity and high cost of the final product, in addition to subject the paper to a very high moisture level that then drops, causing expansion and contraction of the paper that can result in substantial losses in the production, since the paper works mechanically with the variation of humidity.

Given its very low productivity, this process is reserved for art papers, for the printing of painting books or art books. In addition to these problems, the coating formulation depends on commercial resins which maintain the permeability of the system and are usually much more expensive, such as milk casein based resins.

Both processes mentioned depend on the expressive application volume to obtain the final result, being always above 30 g/m² of dry application for a satisfactory result. This means between 20 and 60 g/m² of wet application and evaporation between 10 and 30 grams of water per square meter.

Depending on the type of substrate to be used, one can modulate the characteristics of the curable coating to better adapt to it.

For instance: In the case of pre-treatment for cellulosic substrates, which generally have porosity and capillarity, the formulations that are richest in higher molecular weight oligomers are more suitable because they prevent the reactive material from being absorbed by the substrate, losing surface coverage effectiveness and, thus, loss of copying ability of the matrix surface.

For substrates with low porosity, lower viscosities can be used, which can simplify the application process.

Virtually any oligomer or monomer can be used to produce a radiation- curable material as long as it is compatible with the chosen substrate.

As for the pre-treatment of the cellulosic substrates as mentioned above, the lower cost acquisition products are better, due to the high volume and price competitiveness of the market.

Also for this segment, a determining factor is the sustainability and the recyclability of the final product.

Meeting all the above-mentioned requirements, we have acrylated-epoxidized soybean oil, whose composition contains more than 60% of material of sustainable origin and that proved to be able to receive water-based, solvent-based and oily ink-based prints, being also one of the oligomers of lower cost available in the market.

Another distinctive characteristic of acrylated-epoxidized soybean oil is its intermediate viscosity, around 2000 cps at 25 °C, which virtually eliminates monomer dilution depending on the chosen application process.

One of the most indicated application mechanisms, in this case, is the "kissroll" system or the system present in Solventless type laminators with possibility of thermoregulation of the dosing cylinders.

Just for the purpose of comparison, a conventional acrylated epoxy resin diluted with 20% TRPGDA (tripropylene glycol diacrylate) has around 20,000 cps at 25 °C, which will certainly still require dilution with monomers such as TRPGDA itself or TMPTA (Trimethylolpropane Triacrylate) to obtain an applicable viscosity.

Particularly in applications on cellulosic substrates, the use of monomers may bring about the undesirable effect of cellulose fiber absorption which may result, especially in Ultra Violet light cures, on the presence of uncured monomers at the end of the process.

Given that electron beam curing is more penetrating and efficient, although there is an undesired absorption of reactive components in the fibers and porosities of the substrate, there is a greater possibility that the same are fully polymerized, reducing the risks of future migration to the packaged elements.

In any case, the use of only elements with low probability of absorption, penetration and future migration, besides being more effective in the aspect of adequate closure of the surface, will certainly present lower risks for the safety of use of the final product.

Another interesting category of products are the acrylated polyesters, as they are found in a wide range of viscosities and molecular weights, many in the ideal range for application in a solvent-free system.

In order to meet all the requirements of cost, performance and productivity, formulas having satisfactory performance for the pre-treatment of cellulosic substrates are listed below:

| Formula A1 - Epoxy | | |
|---|---|---|
| Product | Commercial Name | % |
| Oligomeric Epoxy Acrylate | AgiSyn 1010 A75 | 44.00 |
| Monomer | Trimethylolpropane Triacrylate (TMPTA) | 44.00 |
| Photo initiator | Irgacure 1173 | 11.00 |
| Leveling Agent | Tego Glide 432 | 1.00 |
| | | 100.00 |

| Formula A2 - Epoxy | | |
|---|---|---|
| Product | Commercial Name | % |
| Soybean Oils Epoxidized Acrylate | AgiSyn 2020 CD87 | 90.00 |
| Photo initiator | Irgacure 1173 | 9.00 |
| Leveling Agent | Tego Glide 432 | 1.00 |
| | | 100.00 |

| Formula A3 - Polyester | | |
|---|---|---|
| Product | Commercial Name | % |
| Oligomeric Epoxy Acrylate | AgiSyn 720 | 90.00 |
| Photo initiator | Irgacure 1173 | 9.00 |
| Leveling Agent | Tego Glide 432 | 1.00 |
| | | 100.00 |

| Formula A4 - Polyurethane | | |
|---|---|---|
| Product | Commercial Name | % |
| Oligomeric Polyurethane Acrylate | AgiSyn 230A5 | 58.00 |
| Monomer | Tripropylene Glycol Diacrylate (TRPGDA) | 30.00 |
| Photo initiator | Irgacure 1173 | 11.00 |
| Leveling Agent | Tego Glide 432 | 1.00 |
| | | 100.00 |

The same formulas above, without the photoinitiator are suitable for curing by electron beam:

| Formula B1 - Epoxy | | |
|---|---|---|
| Product | Commercial Name | % |
| Oligomeric Epoxy Acrylate | AgiSyn 1010 A75 | 49.44 |
| Monomer | Trimethylolpropane Triacrylate (TMPTA) | 49.44 |
| Leveling Agent | Tego Glide 432 | 1.12 |
| | | 100.00 |

| Formula B2 - Epoxy | | |
|---|---|---|
| Product | Commercial Name | % |
| Soybean oil Epoxy Acrylate | AgiSun 2020 CD87 | 98.90 |
| Leveling agente | Tego Glide 432 | 1.10 |
| | | 100.00 |

| Formula B3 - Polyester | | |
|---|---|---|
| Product | Commercial Name | % |
| Oligomeric Epoxy Acrylate | AgiSyn 720 | 98.90 |
| Leveling agente | Tego Glide 432 | 1.10 |
| | | 100.00 |

| Formula B4 - Polyurethane | | |
|---|---|---|
| Product | Commercial Name | % |
| Oligomeric Polyurethane acrylate | AgiSyn 230A5 | 65.17 |
| monomer | Tripopylene Glycol Diacrylate (TRPGDA) | 33.71 |
| Leveling agente | Tego Glide 432 | 1.12 |
| | | 100.00 |

For pretreatment of non-porous substrates, formulations of lower viscosity may be employed, although they are not mandatory. The same formulas listed above can be used for this purpose, however, depending on the substrate to be pre-treated, the addition of more aggressive monomers to promote adhesion may be necessary.

Within the monomers that can be used for this purposes the following stand out:
- IBOA: Isobornyl Acrylate
- THFA: Tetrahydrofurfuryl Acrylate
- 2-PEA: 2-Phenoxyethyl Acrylate
- ODA: Octyldecil Acrylate
- HDDA: Diacrylated Hexanediol

In addition to the ones listed above, the following ones are further examples of Monomers:
- TMPTA -: Trimethylolpropane Triacrylate
- TMP(EO)TA -: Trimethylolpropane Acrylated Ethoxylated
- TRPGDA -: Tripropylene Glycol Diacrylate

- GPTA -: Glycerolpropoxylated Triacrylate
- NPGDA -: Diacrylated Neopentylglycol
- NPG(PO)DA -: Diacrylated Propoxylated Neopentylglycol
- PEG(X)DA -: Polyethylene Glycol Diacrylate - Various molecular weights.

Other examples of Oligomers:
- Epoxy Acrylates, preferably having a viscosity of less than 20,000 cps.
- Polyester Acrylates - preferably with a viscosity of less than 20,000 cps.
- Polyurethane Acrylates - preferably with a viscosity of less than 20,000 cps.
- Acrylic Acrylates, preferably having a viscosity of less than 20,000 cps.
- Polybutene Acrylates - preferably with a viscosity of less than 20,000 cps.

The main photoinitiators for this process are:
- 1173-: 2-hydroxy-2metyl-1-phenyl-propane-1-one
- 184-: 1-hydroxy-cyclophenyl-ketone
- TPO-: diphenyl-(1,4,6-trimethylbenzoyl)-phosphine oxide
- BDK-: benzyl-dimethyl-ketal

### Examples of additives:

### The main additives are:

Leveling agents, pigments and dyes, wetting agents, silicas and mineral fillers.

To better illustrate the use of the proposed process and the coating formulations, pre-treatment machine models suitable for carrying out the present invention are exemplified.

### BRIEF DESCRIPTION OF THE INVENTION

The attached figures illustrate the suitable machines for the execution of this invention.
Model 1 represents the application method of a UV-curable coating with a transparent cylindrical matrix.
Model 2 shows the application method of a coating curable by electron beam (EB) with a cylindrical matrix.
Model 3 shows the application process of a UV-curable coating with a film as matrix.
Model 4 represents the application process of coating curable by electronic beam (EB) with a film as a matrix.
Model 5 represents the application method of a UV-curable coating where the matrix is a continuous belt.
Model 6 shows the application process of a coating curable by electron beam (EB) where the matrix is a continuous belt.
Model 7 shows the application of a coating curable by electronic beam (EB) simultaneously in two opposite sides of the substrate, in which matrices are continuous belts.

### DETAILED DESCRIPTION OF THE FIGURES

The following nomenclature applies to all the figures:
A - UV curing unit B - EB curing unit
C1, C2 - Points of possible application of coating D - Substrate
E1 - Transparent cylindrical matrix
E2 - Cylindrical matrix
E3 - Film-shaped matrix
E4 - Continuous belt-shaped matrix

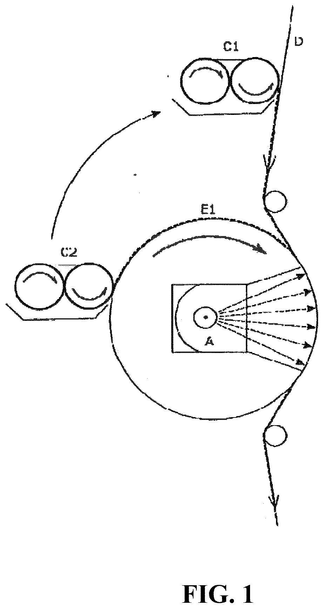

In figure 1, a coiled film-shaped substrate D passes through at least one station for the application of the coating curable by radiation C1 or C2, and is pressed against a cylindrical-shaped matrix E1 transparent to UV rays. This transparent matrix is hollow and contains within it a UV A cure unit that will emit the necessary radiation beam to cure the coating then adhered to the substrate.

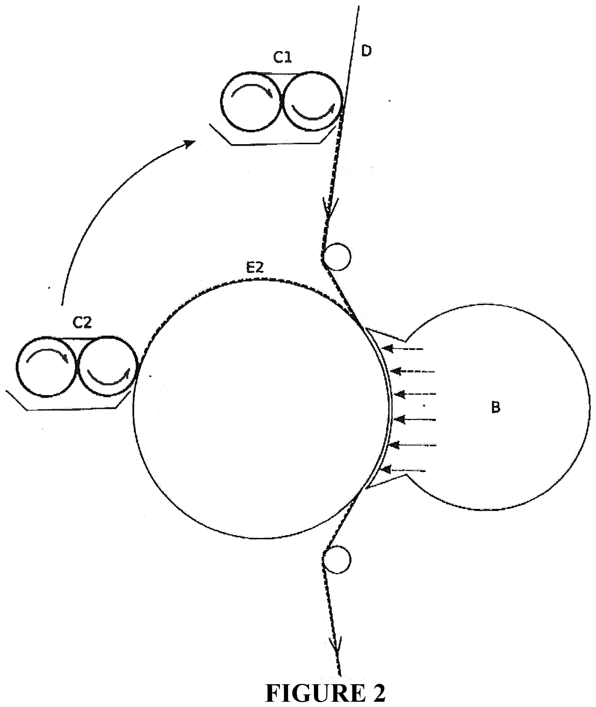

In figure 2, a coiled film-shaped substrate D passes through at least one station for the application of a coating curable by radiation C1 or C2 and is pressed against a cylindrical matrix E2 so that said radiation-curable coating is between the cylindrical matrix E2 and the substrate D. Therefore, the electron beam from unit B, passes through the substrate and cures the coating on the opposite surface.
   The energy electron beam has a penetrating power greater than UV rays and, therefore, this physical characteristic can be used with advantages, since the presence of atmospheric oxygen results in undesirable chemical reactions in the coating, which impacts the quality of the treatment and may even make their application unfeasible, hence the need to cure these compounds in an inert atmosphere. When irradiating on the reverse side of the substrate D, only a negligible amount of air will be trapped between the matrix E2 and the substrate D, which dispenses with the complex inerting equipment.

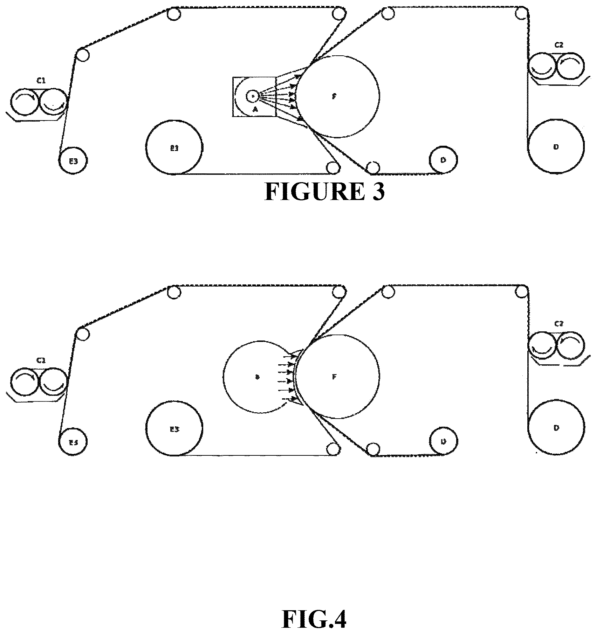

In figure 3, a coiled film-shaped substrate D that passes through at least one station for the application of a curable coating by radiation C1 or C2 and is pressed against a film-shaped matrix which unwinds and is wound after being detached from the substrate D between the coils E3. While in close contact to the substrate D, the coating receives the UV radiation from unit A.
Figure 4 describes a coiled film-shaped substrate D that passes through at least one station for the application of a curable coating by radiation C1 or C2 and is pressed against a film-shaped matrix which unwinds and is wound after being detached from the substrate D between the coils E3. While in close contract with the substrate D, the coating receives the electron beam (EB) from unit B from the opposite side of matrix E3 in the form of a film.

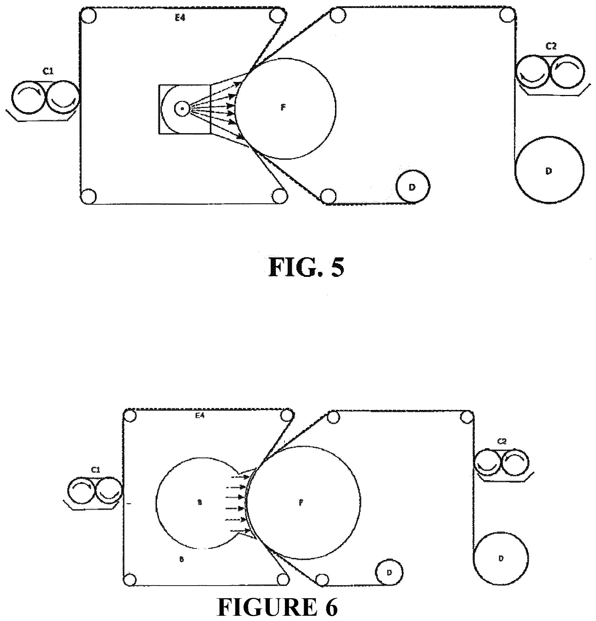

Figure 5 describes a coiled film-shaped substrate B passing through a station for the application of a coating curable by radiation C1 or C2 and is pressed against a continuous belt-shaped matrix E4. While in close contact with substrate D and the coating receives the UV radiation from unit A.
Figure 6 describes a coiled film-shaped substrate D passing through at least one station for the application of a coating curable by radiation C1 or C2 and is pressed against a continuous belt-shaped matrix E4. While in close contact with the substrate D, the coating receives the electron beam (EB) from unit B from the opposite side of the matrix E4 as a continuous belt.

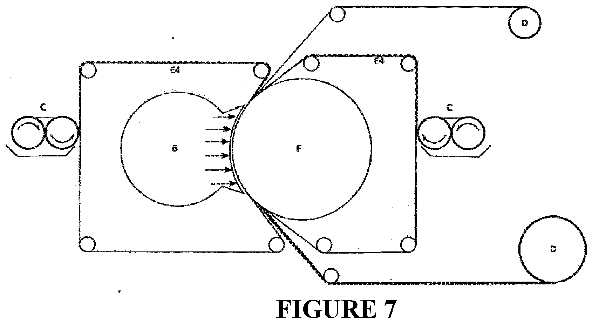

Figure 7 describes a coiled film-shaped substrate D passing through at least two station for the application of coatings curable by radiations C1 and C2 and are pressed against a continuous belt-shaped matrix E4. While in close contact with substrate D, the coatings receive the electron beam (EB) from unit B from the opposite side of the continuous belt-shaped matrix E4, wherein said electron beam is capable of passing through the continuous belt shaped- matrix E4, the coating, the substrate D and curing the coating layer applied to the opposite surface.

These description are simply illustrative and intend in no way to limit the possibility that the persons skilled in the art may suggest.

### EXAMPLE 1:

Use of pre-coating of substrates with copy of the matrix surface smoothed by radiation-curable material in order to obtain a printing surface of a higher quality than couche paper, traditional in the market.

In this specific case, the formulation A1 for curing by ultraviolet lamps or B1 for curing by electron beam in the ratio of 4 g/m² on monolucent white kraft paper was used with a model 3 machine, application position C1. Flexographic printing was then done with water-borne and solvent-based inks. Comparison of the print quality result with that conventionally performed with couché paper revealed that the performance was higher than that which is regularly obtained in the conventional *couché,* resembling the result of a *couché cote* manufactured by the company Brasilcote in the castcote technology mentioned above, but with the cost, time and productivity gains also explained above.

### EXAMPLE 2:

Use of the pre-coating of substrates with copy of the matrix surface smoothed by radiation-curable material in order to obtain a printing surface of a superior quality and with reduced porosity as a basis for the application of silicone for use as liner of self adhesive papers with the significant reduction of silicone consumption. In this specific case, the formulation A2 for curing by ultraviolet lamps or B2 for curing by electron beam in the ratio of 6 g/m² on monolucent white paper short fiber 60 g/m² with a model 3 machine application position C1.

The material was later sent for silicone application, where it was possible to register a reduction of the order of 35% of the silicone application with the maintenance of the same self adhesive release properties.

### EXAMPLE 3:

Use of the pre-coating of substrates with copy of the smooth matrix surface by radiation-curable material with simultaneous transfer of coating, coating or metallization of the copied surface to the substrate.

In this specific case, the formulation A1 for curing by ultraviolet lamps or B1 for curing by electron beam in the ratio of 4 g/m² on monolucent white kraft paper was used with a model 3 machine, application position C1. The basic objective was to transfer the metallization made on a low adhesion polyvinyl butyral coating with a weight of less than 1 g/m² applied to a 45 micron BOPP film whose metallization performed by means of vacuum metallization on the respective coating was transferred by displacement to the surface of the substrate. The thus-treated substrate exhibited a metalized surface with the same characteristics of the metalized film, but without the consumption of the BOPP film and with full recyclability.

## Claims

1. A method for pre-coating substrates with a copy of a matrix surface by radiation-curable material **characterized by** transferring the surface characteristics of a matrix to a substrate in which the characteristics of the matrix surface are transferred to the surface of said substrate when the two surfaces are placed in perfect contact with each other in the presence of a radiation-curable coating, preferably by Ultra Violet Light or Electron Beam at the interface of the surfaces and consisting of the following phases:
a) Applying at least one curable coating layer consisting of a varnish, lacquer or ink curable by Ultra Violet or Electron Beam radiation onto at least one matrix or directly on the receiving substrate.
b) Promoting the perfect contact between the surfaces of at least one matrix with the substrate, preferably supported on cylindrical surfaces allowing the perfect interaction between the surfaces of each matrix and the substrate;
c) While each matrix and substrate are in perfect contact, promote exposure to a radiation source in order to polymerize the curable coating;
d) After polymerization, promote the separation of each matrix and the substrate so as to leave the cured coating layer perfectly adhered to the surface of said substrate.

2. A process for pre-coating substrates with copy of the surface of a matrix by radiation-curable material according to claim 1, **characterized in that** the matrix is in the form of a cylinder, a film or a continuous belt.

3. A process for pre-coating substrates with copy of the surface of a matrix by radiation-curable material according to claim 1, **characterized in that** the sheet-shaped matrix consists of metal or metal alloy;

4. A process for pre-coating substrates with copy of the surface of a matrix by radiation-curable material according to claim 1, **characterized in that** the film-shaped or continuous belt-shaped matrix consists of a polymeric material, preferably polyester, polyolefinic compound, polycarbonate, silicones, acrylic compounds or composition thereof.

5. A process for pre-coating substrates with copy of the surface of a matrix by radiation-curable material according to claim 1, **characterized in that** the film-shaped or continuous belt-shaped matrix consists of films of ductile metals such as aluminum, titanium, copper, zinc and their alloys.

6. The process for the pre-coating of substrates with copy of the matrix surface by radiation-curable material, according to claim 1, **characterized in that** the cylinder-shaped matrix consists of metals, preferably steel and its alloys, nickel, copper, chromium or composition thereof and other metals, polymeric materials, preferably acrylic, polycarbonate, polyesters or composition thereof or else glass or quartz.

7. The process for pre-coating substrates with copy of the matrix surface by radiation-curable material, according to claim 1, **characterized in that** the used radiation is of the ultra violet or electron beam type.

8. The process for pre-coating substrates with copy of the surface of a matrix by radiation-curable material, according to claim 7, **characterized in that** it forms the matrix transparent to the curing radiation, so that said radiation beam is projected through said matrix, in such a way to attain the curable coating and promote its polymerization.

9. The process for pre-coating substrates with copy of a a matrix surface by radiation-curable material, according to claim 7, **characterized in that** the radiation is sufficient to pass through the substrate and cure the coating adhered on the surface opposite that of exposure to said radiation beam.

10. The process for pre-coating substrates with copy of a matrix surface by radiation-curable material, according to claim 7, **characterized in that** the radiation is sufficient to pass through a matrix, a curable coating layer, the substrate and another coating layer deposited on the opposing surface of said substrate, and simultaneously cure the said two layers of curable coatings.

11. The process for pre-coating substrates with copy of the surface of a matrix by radiation-curable material, according to claim 1, **characterized in that** it uses film- or plate-shaped substrates.

12. The process for pre-coating substrates with copy of the surface of a matrix by radiation-curable material, according to claim 11, **characterized in that** the substrates consists of papers, polymeric films, cards and cellulosic compounds and combinations thereof.

13. The process for pre-coating substrates with copy of the surface of a matrix by radiation-curable material, according to claim 1, **characterized in that** the cellulosic surfaces have a porosity that allow a 35% reduction in the amount of silicone necessary for its siliconization.

14. A machine of the process for pre-coating substrates with copy of a matrix surface by radiation-curable material **characterized in that** it allows simultaneous curing of radiation-curable coatings deposited on opposite surfaces of a substrate.

15. The machine of the process for pre-coating substrates with copy of a matrix surface by radiation-curable material, according to claim 13, **characterized in that** the radiation is an electron beam.

16. The machine of the process for pre-coating substrates with copy of a matrix surface by radiation-curable material, according to claim 13, **characterized in that** the close contact between the matrices and the substrates makes the use of an inert atmosphere for coatings curing unnecessary.
